# EUROPEAN PATENT APPLICATION

(11) **EP 2 838 155 A1**
(43) Date of publication of application: **18.02.2015**
(21) Application number: 13180094.8
(22) Date of filing: 12.08.2013
(51) Int. Cl.: H01Q 1/18, H01Q 1/24, H01Q 3/26, H04B 7/06, H04B 7/08

(54) **Adaptive non-mechanical antenna for microwave links**

(71) Applicant: ALCATEL LUCENT, 92100 Boulogne-Billancourt (FR)
(72) Inventor: Lahrech, Ahmed, 78141 Velizy (FR); Lopez, Pierre, 78141 Velizy (FR)
(74) Representative: Camus, Olivier Jean-Claude

(57) **Abstract**

A microwave communication system comprising a remote station, a phased array antenna (2), phase shifters (Ψ1 to ΨN) and a software unit (5), wherein the phased array antenna (2) is emitting a microwave signal beam, wherein the phased array antenna (2) is pointing the beam in a direction of alignment with the remote station, wherein the received signal level at the remote station is maximum in the direction of alignment, wherein the phase shifters (Ψ1 to ΨN) are connected to the antenna (2), wherein the software unit (5) is connected to the phase shifters (Ψ1 to ΨN), wherein the system comprises first means to detect an antenna (2) misalignment, wherein said first means to detect an antenna (2) misalignment are connected to the software unit (5).

## Description

The invention concerns in general the domain of fixed microwave links. More peculiarly, the invention concerns the fixed-microwave links including a phased array antenna which may be subjected to mechanical angular vibrations induced, for instance, by climatic conditions.

### Background

Fixed microwave links constitute one of the key elements of the new generations of mobile networks. These networks offer high capacities to the end users and then high capacities typically within the range of one gigabit per second (Gbps) have to be carried over the fixed microwave links used for the mobile network backhaul.

A microwave link is, as known in the art, a means for exchanging electromagnetic energy carrying information, along a propagation channel, between a local station and a remote station. Each station of the link is typically equipped with a non-mechanical antenna pointing system.

A non-mechanical antenna pointing system is for instance, a software controlled phased array antenna.

A phased array antenna (PAA) can be defined, as a complex antenna constituted of an array of several elementary antennas related in phase for the emission or the reception of electromagnetic signals. A phased array antenna can emit a beam or receive a signal with a directional sensitivity.

It is well known in the art that maximizing the level of energy transmitted between a local antenna and a remote station forming a microwave link is desirable to maximize the bandwidth of the link or channel, and thus the amount of information carried over the link.

For new generations of mobile networks, high bandwidth channels superior or equal to two hundred and fifty megahertz ( ≥ 250 MHz ) are so required to carry out such capacities and the availability of such channel is possible in radio-frequency bands, situated in the millimetric waves domain or waves having a wavelength in the millimeter range: V-band (60 GHz) and E-band (70 - 80 GHz).

### Summary

For these radio-frequency bands, one of the main issues during communication over a microwave link is to maintain the local antenna pointing or alignment with the remote station, in order to maximize the received signal level at remote station.

In particular, due to high density networks, the use of street lighting poles would be highly desirable to deploy massively fixed millimetric waves links for the backhaul network linked to a single remote station.

However such poles are sensitive to wind pressure and change in shape in case of windy conditions. This results in an antenna misalignment with the remote station to which is transmitted the electromagnetic energy in the millimetric wavelengths domain.

This effect is due to the presence of a mast in these poles which can be defined as a mechanical support to which the antenna is fixed, such support being sufficiently long in such poles to be sensitive enough to wind pressure or climatic conditions, to induce a detectable loss of electromagnetic energy level at the remote station location to which the antenna sends electromechanical energy.

The mechanical change of the shape of a mast or pole equipped with an antenna under windy conditions is not only a static change inducing a rotation of the antenna about the three axis of an orthonormal coordinate system OXYZ which is constant with time and can be compensated for when installing the antenna. The random nature of the wind pressure on the pole induces indeed, a dynamic change of the angular position of the antenna due to mast rotation and torsion around the pole axis. In an orthonormal set of coordinates Oxyz defined for the antenna at rest or with null wind pressure, Oz being the direction of the remote station of a microwave link and Oxy being the plane of the antenna, the movements of the antenna of relevance for the channel quality can be summed up by a first angle of rotation of the antenna around the Ox axis or roll and by a second angle of rotation of the antenna around the Oy axis or pitch. By convention, for a pole extending from the earth to the sky, the Ox axis is directed vertically from sky to earth and the Oz axis is directed from the antenna of the link of interest to the remote station of this link. In such a set, the Oy axis is deduced by the vector product or cross product of a unitary vector collinear with Oz with a unitary vector collinear with Ox.

As the vibrations or dynamic variations of the roll angle around the axis X of Oxyz and of the pitch angle around the axis Y of OXYZ is of random nature, they cannot be compensated for when installing the antenna, by a rough mechanical orientation of the pole or of the antenna.

This technical problem of dynamic vibrations of antennas disposed on street lighting poles, is further empowered by the necessity to avoid, in the millimetric waves domain, the electromagnetic absorption of obstacles present in city streets. This consideration leads generally to fix the antenna to the highest part of the mast of a street lighting pole, in order to avoid, for instance, the absorption of trees. The problem of wind pressure influence on the pole and on the angular spatial position of the antenna born by the pole is so critical in the art, for high bandwidth channels.

As a result, the compensation of the dynamic random vibrations in roll angle and pitch angle of an antenna installed on a pole is a difficult problem in the art prior to the invention.

Consequently wind pressure, or random air turbulences, is expected, in the art, to induce, for an antenna on an outdoor pole, a dynamic misalignment and a variable degradation of the received signal quality at the remote station of a microwave link, that severely limit the use of such antenna for high bandwidth communication channels. Therefore in the known systems it is a typical practice to avoid deploying, at low cost, high bandwidth microwave channels on such outdoor media or on any mechanical component subject to mechanical vibration.

In particular, the application of an antenna on a street lighting pole cannot easily be considered in the art for a high bandwidth microwave link, without encountering a loss of bandwidth, or reduction of the fade margin, of the communication channel between the antenna and the remote station forming the link.

The aim of the solution presented here is to maintain the antenna beam steered on a desired direction (remote station) and maintain the received signal level at the remote station such that the degradation of the fade margin in case of windy conditions is avoided.

Within this context, the disclosure concerns:

According to some embodiments, a microwave communication system comprising a phased array antenna (2), a plurality of phase shifters (Ψ1, ..., ΨN) connected t the phased array antenna and a software unit (5) connected to the phase shifters, wherein the phased array antenna is configured for emitting a microwave signal beam in a direction of alignment with a remote station, the system comprising first means configured for detecting a misalignment in the antenna and communicating information on antenna misalignment to the software unit, wherein the software unit is configured to compute, using said information on antenna misalignment, phase steps and apply said phase steps to said phase shifters to compensate for the misalignment.

According to some specific embodiments said first means to detect an antenna misalignment comprise a three-axis accelerometer device (6) configured for measuring a roll angle and a pitch angle of the phased array antenna.

According to some specific embodiments said first means to detect an antenna misalignment is configured to establish a data link (9) between a remote station and the software unit, said data link providing information from the remote station, representative of the quality of the received signal, to the software unit.

According to some specific embodiments said provided remote station information includes the level of received signal.

According to some embodiments there is provided, a method for aligning an antenna, comprising the following steps:
- detecting a misalignment of a phased array antenna from a direction of alignment;
- computing, using a software unit, phase steps useable for compensating said misalignment;
- and applying the phase steps, to a plurality of phase shifters, to steer a signal beam of the phased array antenna on said direction of alignment.

According to some specific embodiments the method further comprises the step of measuring a roll angle and a pitch angle of the phased array antenna using a three-axis accelerometer device (6).

According to some specific embodiments the method further comprises the step of establishing a data link (9) between a remote station and the software unit, said data link providing information from the remote station, representative of the quality of the received signal, to the software unit.

According to some specific embodiments said provided remote station information includes the level of received signal.

### Brief Description of the Drawings

The embodiments of the disclosure will be described in reference to the list of figures below where:
- Fig. 1 shows a first embodiment of the invention, in a plane XOZ, in which the means to detect a misalignment of a phased array antenna (2) and a remote station (not represented) include a three axis (3D) accelerometer device (6).
- Fig. 2 shows a second embodiment of the disclosure, in a plane XOZ, in which the means to detect a misalignment of a phased array antenna (2) and a remote station (not represented) include a data link (9) from the remote station to provide a software unit (5) with information about the alignment status of the antenna (2) and the remote station, as the dynamic or real-time level of signal received from the antenna (2) by the remote station.
- Fig.3 indicates the roll (around X) angle and pitch (around Y) angle name conventions in an orthonormal set of coordinates OXYZ.

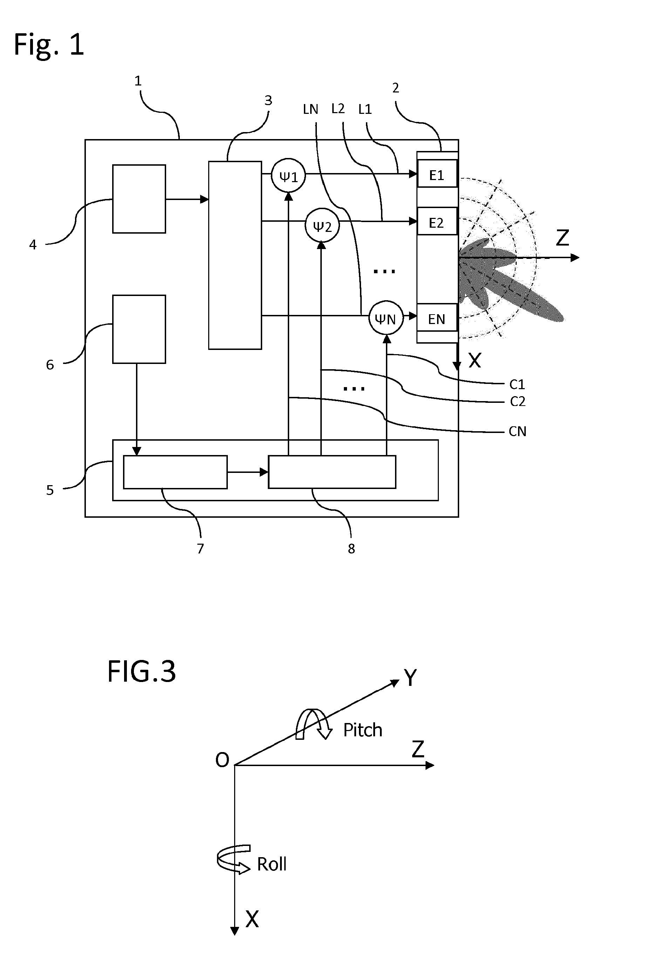

**Detailed Description** In a first embodiment of the disclosure and in reference to figure 1, the system of the disclosure includes a local transceiver (1) emitting microwave radiation to a remote station connected to a backhaul network.

The transceiver (1) is composed of:
- a phased array antenna (2),
- a radiofrequency (RF) signal splitter (3),
- Modem/RF boards (4),
- a local software unit (5) with computation capability,
- a three-axis accelerometer (6) connected to the software unit by a data path and
- phase shifters (Ψ1 to ΨN), disposed on signal lines (L1 to LN) connecting the splitter to the antenna(2), and connected to the software unit (5) by command lines (C1 to CN).

The software unit (5) includes:
- second means to detect an antenna(2) misalignment, which are here means (7) for analyzing angular information about the station, such information being provided by the accelerometer device (6) about such misalignment, via the data path, and
- third means for applying phase shift steps (8) to the phase shifters (Ψ1 to ΨN).

The accelerometer device (6) is here connected to the second means via the data path. The second means are connected to the third means. The third means are connected to the phase shifters (Ψ1 to ΨN) via the command lines (C1 to CN).

In such a local transceiver architecture, the modem/RF boards (4) supply a signal to the RF splitter (3) which sends the signal on signal lines (L1 to LN) referenced individually by Li where "i" is an index varying from 1 to N, N being a natural integer strictly superior to one. Each line Li is connected to an element "Ei" of the phased array antenna(2) and the conjugated emission of the Ei elementary emitters (E1 to EN) forms a radiation pattern of the whole transceiver in a direction of emission aligned with a remote station.

In addition, on each line Li, a phase shifter "Ψi" is disposed in series on the line. Each phase shifter Ψi is also connected to the software unit via a command line "Ci" which enables the software unit to impose a phase shift to the elementary signal transmitted to the antenna (2) via the signal line Li, by means of the phase shifter Ψi.

The RF signal splitter (3) is connected to the Modem radiofrequency boards (MODEM/RF boards)(4). The splitter(3) is disposed between the modem(4) and the lines Li (L1 to LN). The signal splitter (3) is able to transmit the modem signal to the signal lines Li (L1 to LN) with a constant relative phase difference when the phase shifters (Ψ1 to ΨN) are not active. This results in a radiation pattern outside the antenna(2) which includes several lobes including a main lobe directed in a specific spatial direction defining the pointing direction of the antenna beam or signal beam of the transceiver.

During its installation, the antenna (2) is tuned to maximize the receiving signal at the remote station by mechanical means well known in the art. As a result, at the end of the installation, the antenna (2) and the local transceiver (1) point roughly in the direction of the remote station as the signal beam is steered on the direction of the station. In this starting state, the phase shifters (Ψ1 to ΨN) are not used or impose a null phase shift to the signals on the Li lines (L1 to LN).

It has to be noticed that even though the present document uses the term phase shift to steer the beam signal on the remote station, the use of variable time delay, using delay lines instead of phase shifters (Ψ1 to ΨN), would be equivalent to the end of reducing the invention to practice.

From the starting state, non-mechanical operation is applied to the transceiver to orientate the antenna(2) toward the remote station.

The direction of main emission in the starting state being taken as an Oz axis of an orthonormal set of coordinates Oxyz, it is then possible to define a first roll angle of rotation of the local transceiver (1) around an axis Ox and a second pitch angle of rotation of the local transceiver (1) around an axis Oy. The roll angle and the pitch angle constitute a pair of values characterizing the misalignment of the transceiver (1) by reference to the (0,0) roll-pitch pair of values for which the transceiver (1) is aligned with the remote station.

In order to compensate for dynamic or temporal variations of the direction of the signal beam of the transceiver (1) or misalignment, a three dimensions (3D) accelerometer (6) is used in this embodiment, such accelerometer (6) being a known component which is able to track the inertial motion of the transceiver (1).

It has to be noticed that even though the present document uses a 3D accelerometer (6) to track the inertial motion of the transceiver(1), the use of another inertial motion sensors as a gyroscope, would be equivalent to the end of reducing the invention to practice. More generally, provided an inertial sensor is able to track the absolute variations of the roll and pitch angles of the transceiver (1) by reference to a fixed or absolute set of coordinates or is able to give the absolute values of the roll and pitch angles of the transceiver (1), such an inertial sensor is in conformity with the teaching of the disclosure.

The information provided by the accelerometer (6) are provided to the software unit (5), either in raw form (accelerations) or in angular rate form (angular speed around roll axis and angular speed around pitch axis) or in angular form (roll angle and pitch angle).

In any case, the software unit (5) will obtain a roll angle and a pitch angle of the signal beam. To this end, it may detect a misalignment of the phased array antenna (2), by reference to the direction of alignment with the remote station corresponding to the starting state; then it will compute phase steps "φi" to apply to the phase shifters (Ψ1 to ΨN) to cancel said misalignment. These phase steps may normally form a linear phase function law φ(X,Y) in X (coordinate along Ox) and Y (coordinate along Oy) which may define a plane wave surface emerging from the antenna (2).

For each pair of roll and pitch values transmitted to or calculated by the software unit (5), a phase shift law φ'(X,Y,r,p) resulting of the roll and pitch imposed on the transceiver (1) can be computed where φ'(X,Y, r,p) is of the form φ'(X,Y, r,p) = a.X + b.Y with "r" and "p" angular variations related to the roll and pitch values in the starting state and φ'(X,Y, 0,0) =0.

In this first embodiment, phase steps on the phase shifters (Ψ1 to ΨN) will be computed, in order to cancel the φ'(X,Y, r,p) = a.X + b.Y where a and b are known constants, the φ(X,Y) phase law will so be made equal to the opposite of the estimated law φ'(X,Y, r,p) according to the relation φ(X,Y)= - φ'(X,Y, r,p) for each element Ei of the antenna (2), said element Ei being of coordinates (X=Xi,Y=Yi).

It is therefore possible to cancel the misalignment of the antenna (2) and thus of the transceiver (1) by using the roll angle and pitch angle that can be estimated via of the accelerometer (6).

Obviously, in the case of a pure roll angle, a phase law function only of Y, φ(Y)= -b.Y or in the case of a pure pitch angle, a phase law function only of X, φ(X)= -a.X, might be used as well.

It is therefore possible with this first embodiment to cancel a misalignment of the transceiver (1) dynamically and non-mechanically by selecting phase steps adapted to produce a phase shift or delay of opposite value to the one estimated to result from roll and pitch variations of the transceiver (1), by reference to a starting state for which a microwave signal received by a remote station from the local transceiver (1), is considered optimum.

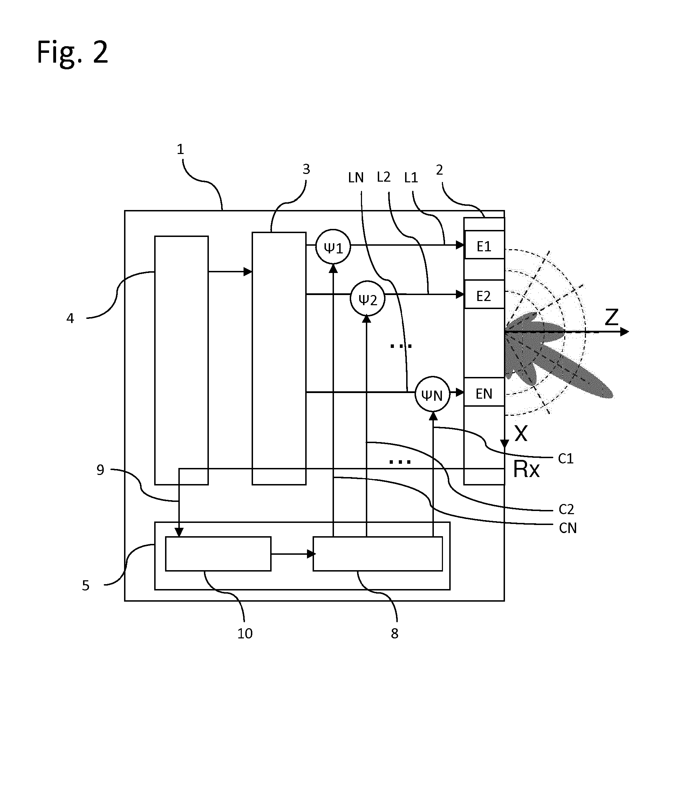

In a second embodiment of the disclosure and in reference to figure 2, the system of the disclosure includes again a local transceiver (1) emitting microwave radiation to a remote station connected to a backhaul network, the remote station being here backwardly linked to the local transceiver (1) by a data path which is here a data link or "Rx" Path (9) linked to the remote station which provides a software unit (5) of the local transceiver (1) with information about the alignment of the transceiver (1) and the remote station.

The transceiver (1) includes:
- a phased array antenna (2),
- a radiofrequency (RF) signal splitter (3),
- Modem/RF boards (4),
- the local software unit (5) with computation capability, and
- the data path which is the data link "Rx" path (9), which is a communication channel between the remote station and the transceiver and which is connected to the software unit (5), and
- phase shifters (Ψ1 to ΨN), disposed on signal lines (L1 to LN) connecting the splitter to the antenna, and connected to the software unit by command lines (C1 to CN).

The software unit (5) includes:
- second means to detect an antenna misalignment, which are here means for analyzing remote station information (10) about such misalignment, and
- third means for applying phase shift steps (8) to the phase shifters (Ψ1 to ΨN).

The second means are connected to the remote station via the data path (9). The second means are connected to the third means. The third means are connected to the phase shifters (Ψ1 to ΨN) via the command lines (C1 to CN).

In such a remote transceiver architecture, the modem/RF boards (4) supply a signal to the RF splitter (3) which sends the signal on signal lines (L1 to LN) referenced individually by Li where "i" is an index varying from 1 to N, N being a natural integer strictly superior to one. Each line Li is connected to an element "Ei" of the phased array antenna and the conjugated emission of the Ei elementary emitters (L1 to LN) forms a radiation pattern of the whole transceiver in a direction of emission aligned with a remote station.

In addition, on each line Li, a phase shifter "Ψi" is disposed in series on the line. Each phase shifter Ψi is also connected to the software unit (5) via a command line "Ci" which enables the software unit (5) to impose a phase shift to the elementary signal transmitted to the antenna (2) via the signal line Li, by means of the phase shifter Ψi.

The RF signal splitter(3) is connected to the Modem radiofrequency boards (MODEM/RF boards)(4). The splitter(3) is disposed between the modem(4) and the lines Li (L1 to LN). The signal splitter (3) is able to transmit the modem signal (4) to the signal lines Li (L1 to LN) with a constant relative phase difference when the phase shifters (Ψ1 to ΨN) are not active. This results in a radiation pattern outside the antenna(2) which includes several lobes including a main lobe directed in a specific spatial direction defining the pointing direction of the antenna beam or signal beam of the transceiver.

During its installation, the antenna (2) is similarly tuned to maximize the receiving signal at the remote station by mechanical means well known in the art and as an advantageous variant with information from the Rx path (9). As a result, at the end of the installation, the antenna (2) and the local transceiver (1) point accurately in the direction of the remote station as the signal beam is steered on the direction of the station. In this starting state, the phase shifters (Ψ1 to ΨN) are not used or impose a null phase shift to the signals on the Li lines (L1 to LN).

It has to be noticed again that even though the present document uses the term phase shift to steer the beam signal on the remote station, the use of variable time delay, using delay lines instead of phase shifters (Ψ1 to ΨN), would be equivalent to the end of reducing the disclosure to practice.

From the starting state, no mechanical operation is applied to the transceiver (1) any more to orientate the antenna (2) toward the remote station.

The direction of main emission in the starting state being taken as an Oz axis of an orthonormal set of coordinates Oxyz, it is then possible to define a first roll angle of rotation of the local transceiver (1) around an axis Ox and a second pitch angle of rotation of the local transceiver (1) around an axis Oy. The roll angle and the pitch angle constitute a pair of values characterizing the misalignment of the transceiver (1) by reference to the (0,0) roll-pitch pair of values for which the transceiver (1) is aligned with the remote station.

In order to compensate for static variations of the direction of the signal beam of the transceiver (1) or misalignment, information from the remote station is used and collected via the Rx link (9). For instance, the level of the received signal is transmitted to the transceiver software unit (5) and the software unit (5) increases or decreases by steps any phase shifter value to maximize this level of received signal.

It has to be noticed that, if the remote station is able to transmit a roll angle and a pitch angle of the remote station, for instance through phase shift analysis of the wave received from the transceiver (1), the same strategy as in the first embodiment can be applied to align the transceiver (1) and the remote station on the basis of the roll angle and pitch angle sent back to the transceiver (1) by the station. Indeed, the roll and pitch angles are defined relatively between the transceiver (1) and the remote station.

To reduce the disclosure to practice, it has to be noticed that the remote station might transmit a signal to noise ratio after demodulation instead of the level of the received signal or, more generally any signal on the Rx return path (9) which is representative of the quality of the received signal at the remote station location.

As well, maximizing an Rx signal which is representative of the quality of the received signal or minimizing an Rx signal which is representative of the error of alignment, between the transceiver (1) and the remote station, would also be equivalent for this second embodiment of the disclosure.

The roll and pitch angle inducing a linear variation of the phase of plane wave form, such a maximization is ensured to converge for instance by looking separately for a value of roll which maximizes the Rx signal fed to the transceiver by the Rx link (9), and then for a pitch value which maximizes the Rx signal.

To this end, one will proceed for instance by determining the sign of the roll angle and then determining the absolute value of the roll angle. Once the roll angle determined in sign and magnitude, the same determination will be done for the pitch angle, the roll angle being compensated for. Such a strategy is the preferred mode for the disclosure since it implies only the maximization of function of one variable which is a coefficient of a linear function of a spatial coordinate.

It has to be noticed that, the determination of both roll and pitch angles, simultaneously, might be made as well, since the maximization of a function of two coefficients or parameters of a linear function of X and Y is well known in the art.

It has to be noticed also that, any method to tilt a plane wave, determine its phase law on the surface of the antenna (2), apply the opposite phase law to the phase shifters (Ψ1 to ΨN) and determine whether the quality Rx signal increases or decreases will so be adapted to this second embodiment of the disclosure. Indeed, such a method would be adapted to determine the best tilt of a plane wave emitted by the phased array antenna (2) without modem signal, in order to maximize the bandwidth of the microwave link formed by the transceiver (1) and the remote station in this second embodiment of the disclosure.

It will be considered below that the level of the received signal is transmitted back to the transceiver (1) by the remote station and that this level has to be maximized.

To determine the sign of the roll angle, for instance, one can choose a positive step increment in roll, estimate the phase law on the antenna (2), apply the opposite phase law on the phase shifters (Ψ1 to ΨN) and verify whether the Rx signal decreases or increases. If the signal increases, the sign of the roll value will be chosen positive and if the signal decreases, the sign of the roll value will be chosen negative.

To determine the amplitude and sign of the roll angle, one can choose then an estimated initial value of 0 for the roll value and a positive step increment in roll multiplied by the sign obtained previously, then one can estimate the phase law on the antenna (2) for a current value of roll equal to the zero plus the phase step increment, apply the opposite phase law on the phase shifters (Ψ1 to ΨN) and verify whether the Rx signal increases or decreases. If the signal increases, the increment in the roll value will added to the initial value to get an updated current value and the same operations will be performed with an initial value becoming the updated current value. If the signal decreases, the final value of roll will be fixed to the last initial value of roll angle.

Once the value of the roll angle has been determined, the same strategy can be used to determine the pitch angle adding to the phase law induced by the pitch angle, a constant phase law induced by the final value of roll determined by the roll determination algorithm above. The linear nature of the phase law induced by roll and pitch allows such superposition of phase contributions and thus the separated maximization of roll and pitch.

It has to be noticed that in all the embodiments of the disclsoure, if the phase shifters (Ψ1 to ΨN) operate with discrete increments of phase or phase steps, for technical reasons (Phase shifters implemented as array of switches and inductances, ferrites or optical delay lines for instance), the optimization of the received Rx signal will be made with discrete values of phase shift, well known in the art.

One will therefore determine the sign of the pitch angle by applying similarly a positive increment in pitch angle and determining whether the Rx signal increases or decreases. Then one will determine the sign and amplitude of the pitch angle with an increment in pitch angle that causes the Rx signal to increase up to a value in pitch angle for which the Rx signal decreases.

Any other strategy of research of a maximum of a function of one variable can be used equivalently to determine, separately and in any order (roll angle first and pitch angle second or pitch angle first and roll angle second), the roll angle value and the pitch angle value for which an absolute maximum of the Rx signal is obtained from the remote station, in this second embodiment.

To use the first or the second embodiment of the disclosure, one can proceed as follows:
- detect a misalignment of a phased array antenna (2) of a transceiver (1), by reference to a nominal direction of alignment with a remote station with which the transceiver(1) communicates by microwaves;
- compute, with a software unit (5), phase steps for phase shifters (Ψ1 to ΨN) applied to the antenna (2), that would cancel the misalignment, if they were applied to the antenna (2);
- and apply the computed phase steps, to the phase shifters (Ψ1 to ΨN), to steer the signal beam of the phased array antenna (2) on the direction of the remote station.

Equivalently, in the above method or use, it will be possible to compute the phase steps that would cancel, if changed in sign, the misalignment and apply the phase steps, changed in sign, to the antenna (2). With this strategy, it is possible to have in memory of the software unit (5), an image of the roll angle and pitch angle of the antenna (2) and use maximization techniques of a quality Rx signal to implement this second embodiment. Alternatively, it is also possible to have in memory of the software unit (5), the opposite values of the roll angle and the pitch angle of the transceiver (1) and to apply these values to the antenna (2) to obtain an alignment with the remote station.

The invention is particularly suited for the installation of transceivers including phased array antennas on poles or masts and especially outdoor poles as street lighting poles, which are sensitive to wind pressure, such pressure inducing, indeed, roll angles and pitch angles variations of the antenna (2) of the transceiver (1).

It has to be noticed that the invention, in any embodiment, can be applied equivalently to compensate for mechanical vibrations of the support of a phased array antenna or to compensate for static deformations ( for instance occurring with time, as creep ) of the support of a phased array antenna, in a microwave link.

## Claims

1. A microwave communication system comprising a phased array antenna (2), a plurality of phase shifters (Ψ1, ..., ΨN) connected to the phased array antenna and a software unit (5) connected to the phase shifters, wherein the phased array antenna is configured for emitting a microwave signal beam in a direction of alignment with a remote station, the system comprising first means configured for detecting a misalignment in the antenna and communicating information on antenna misalignment to the software unit, wherein the software unit is configured for computing, using said information on antenna misalignment, phase steps and applying said phase steps to said phase shifters to compensate for the misalignment.

2. The system of claim 1 wherein said first means to detect an antenna (2) misalignment comprise a three-axis accelerometer device (6) configured for measuring a roll angle and a pitch angle of the phased array antenna (2)

3. The system of claim 1 wherein said first means to detect an antenna (2) misalignment is configured for establishing a data link (9) between a remote station and the software unit (5), said data link (9) configured for providing information from the remote station, representative of the quality of the received signal at said remote station, to the software unit (5).

4. The system of claim 3 wherein said provided remote station information includes a level of received signal.

5. A method for aligning an antenna, comprising the following steps:
- detecting a misalignment of a phased array antenna (2) from a direction of alignment;
- computing, using a software unit (5), phase steps usable for compensating said misalignment; and
- applying the phase steps, to a plurality of the phase shifters (Ψ1 to ΨN), configured for steering a signal beam of the phased array antenna (2) on said direction of alignment.

6. The method of claim 5 further comprising the step of establishing a data link (9) between a remote station and the software unit, said data link providing information from the remote station, representative of the quality of the received signal, to the software unit.

7. The method of claim 6 wherein said provided remote station information includes the level of received signal.
